(19) Europäisches Patentamt / European Patent Office / Office européen des brevets

(11) **EP 1 620 289 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(21) Anmeldenummer: 04712474.8

(22) Anmeldetag: **19.02.2004**

(51) Int Cl.:
*B60R 1/00* *(2006.01)*   *G06K 9/00* *(2006.01)*
*G08B 13/194* *(2006.01)*   *G08B 13/196* *(2006.01)*

(86) Internationale Anmeldenummer:
**PCT/DE2004/000305**

(87) Internationale Veröffentlichungsnummer:
**WO 2004/094196 (04.11.2004 Gazette 2004/45)**

(54) **VORRICHTUNG UND VERFAHREN ZUR KALIBRIERUNG EINES BILDSENSORS**

DEVICE AND METHOD FOR CALIBRATING AN IMAGE SENSOR

DISPOSITIF ET PROCEDE DE CALIBRAGE D'UN CAPTEUR D'IMAGES

(84) Benannte Vertragsstaaten:
**DE FR GB**

(30) Priorität: **24.04.2003 DE 10318500**

(43) Veröffentlichungstag der Anmeldung:
**01.02.2006 Patentblatt 2006/05**

(73) Patentinhaber: **ROBERT BOSCH GMBH**
**70442 Stuttgart (DE)**

(72) Erfinder:
 • **BOTHE, Hans-Dieter**
  **30926 Seelze (DE)**
 • **ABRAHAM, Steffen**
  **31134 Hildesheim (DE)**

(56) Entgegenhaltungen:
 DE-A- 19 621 612    US-A- 5 978 081
 US-A1- 2002 030 608

EP 1 620 289 B1

**Beschreibung**

Stand der Technik

Die Erfindung betrifft eine Vorrichtung und ein Verfahren zur Bestimmung von Kalibrierparametern eines Bildsensors nach dem Oberbegriff des Anspruchs 1 bzw. dem Oberbegriff des Anspruchs 6.

Kraftfahrzeughersteller planen den Einsatz von Sensorik, insbesondere von Bildsensoren, zur Überwachung des Innenraumes eines Kraftfahrzeuges. Vorgesehen ist die Verwendung von Bildsensoren bei der intelligenten Airbagsteuerung. Im Rahmen der intelligenten Airbagsteuerung wird an der Klassifikation der Sitzbelegung im Kraftfahrzeug gearbeitet, um beispielsweise Verletzungen bei Kleinkindern durch die Auslösung des Airbags bei rückwärts eingebauten Kindersitzen zu verhindern. Anderseits ist geplant, die Position von Körperteilen der Insassen, wie dem Kopf oder dem Rumpf, und/oder die Sitzhaltung der Insassen bezüglich des Airbags durch eine sogenannten "Out-of-Position Detektion" zu überwachen, um insbesondere Verletzungen durch zu dichte Positionierung des Kopfes am Airbagmodul bei dessen Auslösung zu verhindern.

Beispielsweise ist aus der WO 01/60662 A1 ein Verfahren und eine Vorrichtung zur Sitzbelegungserkennung mittels Videosensorik und Fußraumsensorik bekannt. Es wird vorgeschlagen, die Kopfhöhe einer auf einem Sitz befindlichen Person mit der Videosensorik zu erfassen, zusammen mit der Fußraumsensorik eine Klassifikation der Sitzbelegung durchzuführen und in Abhängigkeit der Sitzbelegung den Airbag zu steuern. Hinweise auf eine Vorrichtung und ein Verfahren zur Bestimmung von Kalibrieiparametern eines Bildsensors der Videosensorik fehlen in der WO 01/60662 A1.

Eine gattungsgemäße Vorrichtung und ein gattungsgemäßes Verfahren sind aus der US 2002/0030608 A1 bekannt.

Vorteile der Erfindung

Erfindungsgemäß wird eine Vorrichtung mit den Merkmalen des Anspruchs 1 und ein Verfahren mit den Merkmalen des Anspruchs 6 vorgeschlagen.

Die nachfolgend beschriebene Vorrichtung zur Bestimmung wenigstens eines Kalibrierparameters wenigstens eines Bildsensors, wobei bei einer erkannten Dekalibrierung des wenigstens einen Bildsensors wenigstens eine Verarbeitungseinheit den wenigstens einen Kalibrierparameter in Abhängigkeit von Bildsignalen bestimmt, die der wenigstens eine Bildsensor zumindest von wenigstens einem invarianten Muster ableitet, hat den Vorteil, dass eine Fehlfunktion wenigstens eines Bildsensors infolge von Dekalibrierungen erkannt und zusätzlich automatisch korrigiert werden kann. Alternativ oder zusätzlich ist es vorteilhaft, eine erkannte Dekalibrierung wenigstens einem nachfolgenden System und/ oder dem Fahrer (Bediener) des Kraftfahrzeuges zu melden. Die automatische Überwachung der Kalibrierung trägt in vorteilhafter Weise zu einer zuverlässigen Funktion von Bildsensoren bei und ermöglicht hierdurch insbesondere einen Einsatz von Bildsensoren für sicherheitskritische Anwendungen im Kraftfahrzeuginnenraum.

Ferner wird in vorteilhafter Weise der Aufwand der Montage des wenigstens einen Bildsensors im Kraftfahrzeug durch die automatische Bestimmung wenigstens eines Kalibrierparameters verringert. Hierdurch entfällt die Notwendigkeit spezielle Kalibrierverfahren während der Fertigung des Kraftfahrzeuges und/oder bei Reparaturarbeiten durchzuführen. Ferner trägt die Vorrichtung dazu bei, dass enge Fertigungstoleranzen, die ohne die nachfolgend beschriebene Vorrichtung zur Einhaltung von Kalibrierparametern spezifiziert werden müssten, vergrößert werden können. Hieraus ergibt sich eine besonders vorteilhafte Kostensenkung bei der Fertigung und/oder der Reparatur eines Kraftfahrzeuges. Zusammenfassend ist die nachfolgend beschriebene Vorrichtung in vorteilhafter Weise für den Serieneinsatz von Bildsensoren bei sicherheitskritischen Anwendungen in Kraftfahrzeugen, insbesondere bei einer intelligenten Airbagsteuerung, geeignet, da Fehlfunktionen der Bildsensoren insbesondere in Form einer Dekalibrierung erkannt werden.

Besonders vorteilhaft ist die Bildung des wenigstens einen invarianten Musters durch wenigstens ein zur Bestimmung des wenigstens einen Kalibrierparameters in der Szene angebrachtes Bezugsobjekt. Vorteilhaft ist die Nutzung von signalisierten Bezugsobjekten zur Kalibrierung wenigstens eines Bildsensors. Besonders vorteilhaft sind die signalisierten Bezugsobjekte im Innenraum von Kraftfahrzeugen. Signalisierte Bezugsobjekte haben den Vorteil, dass sie von der Sensorik einfach erfassbar sind und durch die Signalisierung mit Mitteln der Signalverarbeitung in den Messdaten zuverlässig identifizierbar sind.

Vorteilhaft ist, wenn die Signalisierung der Bezugsobjekte durch eine besondere Helligkeit erreicht wird, entweder aktiv durch Leuchtmittel, wie LED-Dioden und/oder Infrarot-Leuchtdioden, und/oder passiv durch Oberflächen hoher Reflektivität (Rückstrahlungsvermögen, Albedo). Besondere Vorteile weisen daher Bezugsobjekte auf, die als Leuchtmittel, insbesondere als Leuchtdiode (LED-Dioden), ausgestaltet sind und/oder die eine hohe Reflektivität haben. Derart gestaltete Bezugsobjekte tragen zu einer einfachen Erfassbarkeit des wenigstens einen invarianten Musters durch die Verarbeitungseinheit bei.

Ferner ist von Vorteil, wenn die Signalisierung des wenigstens einen Bezugsobjektes durch eine besondere Form erreicht wird. Besonders vorteilhaft sind Bezugsobjekte, die eine geometrische Form haben, wie beispielsweise einen Punkt und/oder einen Kreis und/oder ein Dreieck und/oder ein Viereck und/oder ein Quadrat. Alternativ oder zusätzlich sind Buchstaben und/oder Schriftzüge und/oder Logos als Bezugsobjekte vorteilhaft. Dies trägt zu einer einfachen Identifizierbarkeit des wenigstens einen invarianten Musters in den Bildsignalen bei.

Vorteilhaft ist ferner die Anordnung von Bezugsobjekten zu wenigstens einem zweidimensionalen (2D) und/oder wenigstens einem dreidimensionalen (3D) invarianten Muster, wobei das Muster eine geometrische Form, wie beispielsweise ein Kreuz und/oder ein Kreis und/oder einen Schriftzug, aufweist. Besonders vorteilhaft ist diese Variante der nachfolgend beschriebenen Vorrichtung in Verbindung mit signalisierten Bezugsobjekten, insbesondere mit durch Leuchtmittel, wie Leuchtdioden, signalisierten Bezugsobjekten. Dies trägt dazu bei, dass das wenigstens eine invariante Muster durch die Verarbeitungseinheit einfach wiedererkannt und gegebenenfalls verschiedene invariante Muster voneinander unterschieden werden können.

Besonders vorteilhaft ist, wenn das wenigstens eine Bezugsobjekt auf wenigstens einem bezüglich der Überwachungsfunktion des wenigstens einen Bildsensors relevanten Objekt der Szene angebracht ist. Insbesondere bei der Verwendung der Vorrichtung in einem Kraftfahrzeug ist es besonders vorteilhaft, wenn sich wenigstens ein bekanntes Bezugsobjekt und/oder ein invariantes Muster (Bezugsmuster) auf wenigstens einem für eine jeweilige Anwendung relevanten Objekt, wie beispielsweise der Airbag-Klappe und/oder dem eigentlichen Airbag und/oder dem Lenkrad, befindet. Dies ermöglicht die Abstandmessung zwischen wenigstens einem oder mehreren dieser relevanten Objekte und anderen, auch nicht signalisierten Objekten im Kraftfahrzeuginnenraum, ohne dass die Lage und Ausrichtung der Sensorik, also des wenigstens einen Bildsensors, zu diesem wenigstens einem relevanten Objekt a priori, beispielsweise durch Vermessung mit einem weiteren Sensor, bekannt sein muss.

Vorteilhaft ist ferner, wenn das wenigstens eine invariante Muster alternativ oder zusätzlich durch wenigstens ein natürlich vorkommendes Objekt der Szene gebildet wird. Besonders vorteilhaft ist, wenn zum Zweck der Kalibrierung die Lage von bauartbedingt im Kraftfahrzeug vorhandenen Objekten in den Bildsignalen überwacht und verfolgt wird. Bauartbedingt im Kraftfahrzeug vorhandene Objekte sind beispielsweise wenigstens ein Türholm und/oder wenigstens eine Armatur und/oder wenigstens ein Himmel des Kraftfahrzeugdaches.

Vorteilhaft ist die nachfolgend beschriebene Vorrichtung zur Bestimmung wenigstens eines Kalibrierparameters wenigstens eines CMOS-Bildsensors und/oder wenigstens eines CCD-Bildsensors und/oder wenigstens eines monokularen Bildsensors und/oder wenigstens einer Stereokamera und/oder wenigstens eines tiefenbildgebenden Bildsensors.

Die vorstehend beschriebenen Vorteile der Vorrichtung gelten entsprechend für das Verfahren zur Bestimmung wenigstens eines Kalibrierparameters wenigstens eines Bildsensors.

Besonders vorteilhaft ist ein Computerprogramm mit Programmcodemitteln, um alle Schritte oder zumindest die wesentlichen Schritte des nachfolgend beschriebenen Verfahrens durchzuführen, wenn das Programm auf einem Computer ausgeführt wird. Die Verwendung eines Computerprogramms ermöglicht die schnelle und kostengünstige Anpassung des Verfahrens an unterschiedliche invariante Muster und/oder unterschiedliche Szenen, insbesondere unterschiedliche Innenräume von Kraftfahrzeugen.

Weitere Vorteile ergeben sich aus der nachfolgenden Beschreibung von Ausführungsbeispielen mit Bezug auf die Figuren und aus den abhängigen Patentansprüchen.

Zeichnung

Die Erfindung wird nachstehend anhand der in der Zeichnung dargestellten Ausführungsformen näher erläutert.
Es zeigen:

- Figur 1 eine Übersichtszeichnung,
- Figur 2 ein Blockdiagramm,
- Figur 3 eine Übersichtszeichnung des bevorzugten Ausführungsbeispiels,
- Figur 4 ein Ablaufdiagramm,
- Figur 5 eine Übersichtszeichnung eines weiteren Ausführungsbeispiels.

Beschreibung von Ausführungsbeispielen

Nachfolgend werden eine Vorrichtung und ein Verfahren zur Überwachung, Nachführung und Bestimmung von wenigstens einem Kalibrierparameter der geometrischen Kalibrierung von wenigstens einem Bildsensor beschrieben, wobei der wenigstens eine Bildsensor derart konfiguriert ist, dass er eine in Teilen gleichbleibende Szene überwacht. In einem Ausführungsbeispiel wird der wenigstens eine Bildsensor zur Überwachung des Innenraumes eines Kraftfahrzeuges verwendet.
Beim Einsatz von Bildsensoren im Rahmen der intelligenten Airbagsteuerung im Fahrzeuginnenraum, insbesondere bei der Klassifikation der Sitzbelegung und/oder der Out-Of-Position Detektion, ist die Herstellung einer geometrischen Lagerelation zwischen Messdaten und Fahrzeuginnenraum, also beispielsweise der Karosse und/oder dem Airbagmodul, notwendig. Hierzu sind zwei unterschiedliche Vorgehensweisen denkbar. Zum einen ist es möglich, durch ein mathematisches Modell explizit die Messwerterfassung zu beschreiben. Das mathematische Modell enthält numerische Kalibrierparameter, welche die Lage des wenigstens einen Bildsensors bezüglich des Kraftfahrzeuges beschreiben (extrinsische Kalibrierparameter der extrinsischen Kalibrierung) und/oder numerische Kalibrierparameter, welche die Messwerterfassung im wenigstens eine Bildsensor charakterisieren (intrinsischen Kalibrierparameter der intrinsischen Kalibrierung). Intrinsische Kalibrierparameter sind beispielsweise wenigstens eine Kamerakonstante und/oder wenigstens ein Kamerahauptpunkt und/oder wenigstens ein Verzeichnisparameter. Bei der zweiten Vorgehensweise erfolgt eine direkte Auswertung der Messdaten, beispielsweise über einen Klassifikator. Dabei existieren explizit keine numerischen Kalibrierparameter im Gesamtsystem Bildsensor und Auswertung. Zur Klassifikation wird in der Verarbeitungseinheit ein lernfähiger Klassifikator, beispielsweise ein neuronales Netz, verwendet. Der Klassifikator wird zunächst trainiert. Hierzu werden mit dem Sensor verschiedene Sitzbelegungen, beispielsweise Sitz leer und/oder Kindersitz, aufgenommen und zur Situation manuell die gewollten, korrekten Entscheidung, wie beispielsweise Sitz leer, gespeichert. Die Messdaten mit korrekter Entscheidung werden dem Klassifikator mitgeteilt, der hieraus Daten für die Klassifikation extrahiert (Anlernen des neuronalen Netzes). Im späteren Einsatz wird der Klassifikator aus ankommenden Messdaten eine Entscheidung ableiten. Über die Geometrie und die Kalibrierung weiß der Klassifikator nichts. Wenn der Bildsensor seine Lage im Kraftfahrzeug ändert, ist nicht sichergestellt, dass der Klassifikator ohne erneutes Anlernen korrekte Ergebnisse liefert. Nach Inbetriebnahme eines Bildsensors in einem Kraftfahrzeug zur Überwachung des Innenraumes müssen entsprechend der beiden Vorgehensweisen entweder die Kalibrierparameter bekannt sein und/oder bestimmt werden oder es werden implizit die Eigenschaften der Messwerterfassung als bekannt und über den Einsatzzeitraum als unveränderlich vorausgesetzt. Diese Eigenschaften des wenigstens einen Bildsensors, dass eine explizit und/oder implizit bekannte geometrische Lagerelation zwischen den Messdaten und der überwachten Szene, insbesondere dem Innenraum des Kraftfahrzeuges, besteht, wird als geometrische Kalibrierung des wenigstens einen Bildsensors bezeichnet.

Die nachfolgend beschriebene Vorrichtung und das Verfahren leisten eine automatische Überwachung und Erkennung von Dekalibrierung, beispielsweise durch Dejustage und/oder Änderungen in der Messwerterfassung, des wenigstens einen Bildsensors. Daneben ermöglichen die Vorrichtung und das Verfahren die automatische Bestimmung und/oder Nachführung von wenigstens einem Kalibrierparameter des wenigstens einen Bildsensors während des Sensorbetriebes. Für die automatische Überwachung der Dekalibrierung und die Kalibrierung des wenigstens einen Bildsensors wird wenigstens ein spezielles signalisiertes Bezugsobjekt, das im bevorzugten Ausführungsbeispiel im Innenraum eines Kraftfahrzeugs angebracht ist, und/oder wenigstens ein natürlich vorkommendes Objekt der Szene, im bevorzugten Ausführungsbeispiel wenigstens ein bauartbedingt im Kraftfahrzeug vorhandenes Objekt, als Bezugsobjekt verwendet. Die Bezugsobjekte werden mit dem wenigstens einen Bildsensor beobachtet. Ferner werden die zu den Bezugsobjekten zugehörigen Messdaten des wenigstens einen Bildsensors ausgewertet, indem die Messdaten mit den Solldaten verglichen werden. Anhand der Differenz zwischen Messdaten und Solldaten wird die Funktion des wenigstens einen Bildsensors überwacht und/oder der wenigstens eine Bildsensor nach Bestimmung wenigstens eines Kalibrierparameters kalibriert.

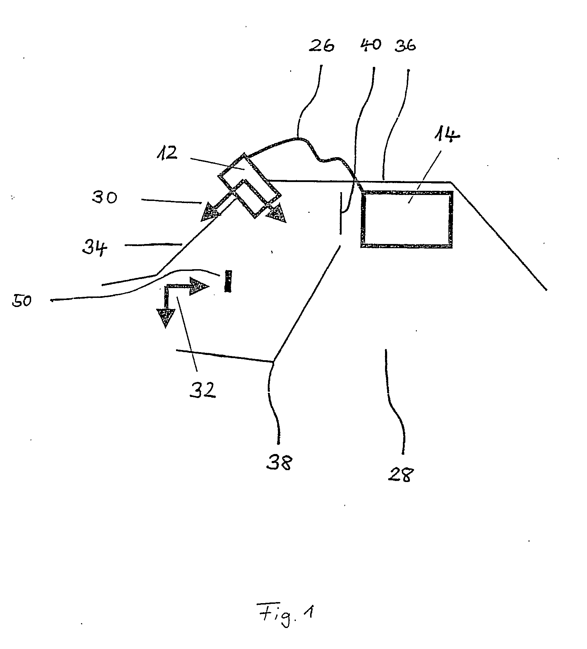

Figur 1 zeigt eine Übersichtszeichnung des bevorzugten Ausführungsbeispiels zur Erläuterung der Verwendung des Bildsensors 12, der zur Überwachung des Innenraumes 28 eines Kraftfahrzeuges eingesetzt wird. Der Bildsensor 12 ist so im Bereich der Windschutzscheibe 30 und des Daches 36 des Kraftfahrzeuges angebracht, dass der Bilderfassungsbereich des Bildsensors 12 den Innenraum 28 des Kraftfahrzeuges erfasst. Dabei nimmt der Bildsensors 12 den Sitz 38, beispielsweise den Beifahrersitz, und/oder die Kopfstütze 40 auf. Ferner erfasst der Bildsensor 12 gegebenenfalls eine nicht eingezeichnete Person und/oder andere Gegenstände im Innenraum 28, insbesondere auf dem Sitz 38. Der Bildsensor 12 ist über eine Signalleitung 26 mit einer Verarbeitungseinheit 14 verbunden. In der Figur 1 ist die Lage 30 des Bildsensors 12 in Bezug zum Bezugssystem 32 des Kraftfahrzeugs dargestellt. Ferner zeigt die Figur 1 ein Airbagmodul 50, das zum Schutz von Personen im Innenraum 28 bei einem Unfall des Kraftfahrzeuges eingesetzt wird.

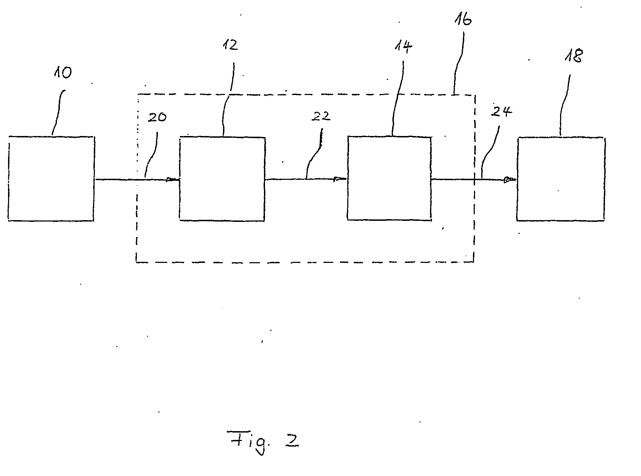

Figur 2 zeigt ein Blockdiagramm der Figur 1, bestehend aus der zu überwachenden Szene 10, dem Bildsensor 12 und einer Verarbeitungseinheit 14. Die zu überwachende Szene 10 ist der Innenraum des Kraftfahrzeuges. Der Bildsensor 12 erzeugt aus der Lichtstrahlung 20 der zu überwachenden Szene 10 Bildsignale 22. Die Bildsignale 22 werden als Messdaten über die Signalleitung 26 nach Figur 1 zur Verarbeitungseinheit 14 übertragen. In der Verarbeitungseinheit 14 wird zum einen das nachfolgend beschriebene Verfahren zur Bestimmung wenigstens eines Kalibrierparameters durchgeführt. Zum anderen findet in der Verarbeitungseinheit 14 die Verarbeitung der Bildsignale 22 des Bildsensors 12 statt, um die Überwachungsfunktion des Bildsensors 12 zu erfüllen. Der Bildsensor 12 und die Verarbeitungseinheit 14 bilden das Messsystem 16. Im bevorzugten Ausführungsbeispiel wird der Bildsensor 12 zur intelligenten Airbagsteuerung eingesetzt. Die Verarbeitungseinheit 14 wertet die Bildsignale 22 aus, um Signale des Messsystems 24 über eine Signalleitung an ein nachfolgendes System 18 zur Airbagsteuerung weiterzuleiten. Die Signale des Messsystems 24 beinhalten Informationen zur Klassifikation der Sitzbelegung und/oder Daten über die Out-Of-Position Detektion von Personen auf den Sitzen des Kraftfahrzeuges. Die Übertragung der Bildsignale 22 und/oder der Signale des Messsystems 24 auf den Signalleitungen erfolgt elektrisch und/oder optisch und/oder per Funk. In einer Variante des bevorzugten Ausführungsbeispiels ist der Bildsensor 12 und/oder die Verarbeitungseinheit 14 und/oder das nachfolgende System 18 in einer oder gegebenenfalls mehreren Einheiten realisiert.

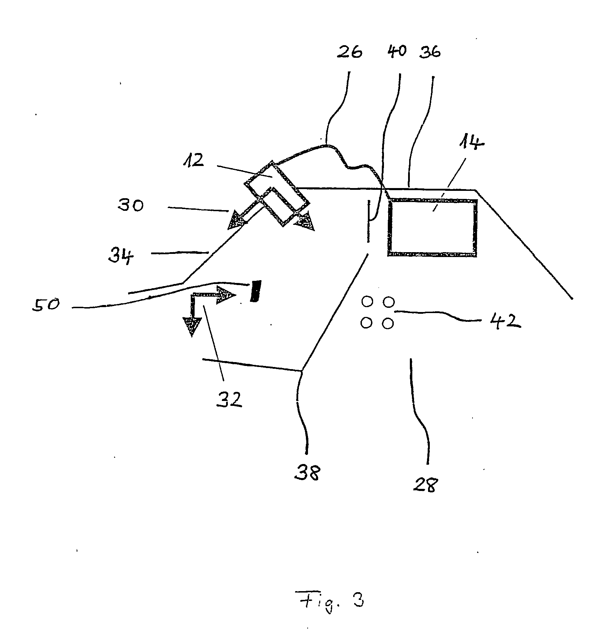

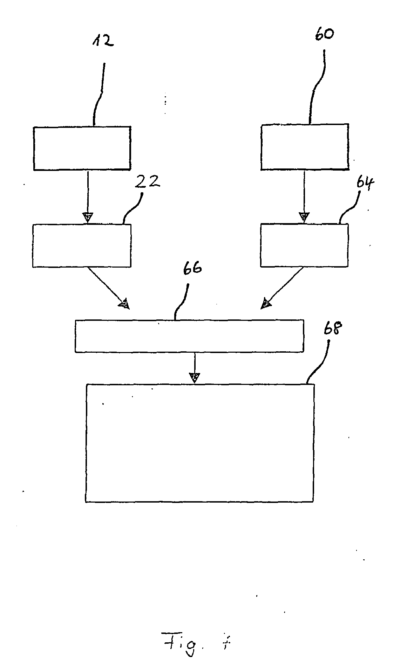

Figur 3 zeigt eine Übersichtszeichnung des bevorzugten Ausführungsbeispiels mit einer Vorrichtung zur Bestimmung wenigstens eines Kalibrierparameters des Bildsensors 12. Figur 3 ist eine Erweiterung der Figur 1. Im folgenden werden nur die zusätzlichen Teile der Figur 3 erläutert. Im Innenraum 28 des Kraftfahrzeuges werden speziell signalisierte Objekte 42 so eingebracht, dass sie im Bilderfassungsbereich des Bildsensors sind. Signalisierte Objekte 42 sind Objekte, die sich mit dem jeweiligen Sensorsystem, im bevorzugten Ausführungsbeispiel dem Bildsensor 12, gut automatisch detektieren lassen. Im bevorzugten Ausführungsbeispiel werden Infrarot-Leuchtdioden (IR-Leuchtdioden) eingesetzt. Die Position der signalisierten Objekte 42 in den Messdaten (Bildsignale) des Bildsensors 12 (Videosensor) werden mit der Sollposition der signalisierten Objekte 42 in der Verarbeitungseinheit 14 verglichen. Bei Abweichungen wird eine Dekalibrierung erkannt. Ferner wird die Position der signalisierten Objekte 42 in den Sensormessdaten zur Nachführung und/oder Bestimmung von wenigstens einem Kalibrierparameter eingesetzt. In einer Variante des bevorzugten Ausführungsbeispiels werden als signalisierte Bezugsobjekte 42 Bezugsobjekte mit Oberflächen mit hoher Reflektivität verwendet. Vorzugsweise werden signalisierte Bezugsobjekte 42 mit einer Reflektivität zwischen 0,5 und 1,0 eingesetzt. Die Synonyme Reflektivität, Rückstrahlvermögen und Albedo geben den Anteil der auf eine Oberfläche einfallenden Strahlung an, die zurückgestrahlt wird. Der Wert der Reflektivität kann Werte zwischen 0 bis 1 annehmen, wobei ein Wert von 1 bedeutet, dass 100% der einfallenden Strahlung zurückgestrahlt wird. Zusätzlich weisen die Bezugsobjekte gegebenenfalls eine geometrische Form auf. Als geometrische Formen werden beispielsweise wenigstens ein Punkt und/oder wenigstens ein Kreis und/oder wenigstens ein Dreieck und/oder wenigstens ein Viereck und/oder wenigstens ein Quadrat verwendet. Alternativ oder zusätzlich zu der geometrischen Form werden in weiteren Varianten als Bezugsobjekte wenigstens ein Buchstabe und/oder wenigstens ein Schriftzug und/oder wenigstens ein Logo verwendet. In einer weiteren Variante sind mehrere Bezugsobjekte alternativ oder zusätzlich zu einem 2D- oder 3D-Muster, beispielsweise wenigstens einem Kreuz und/oder wenigstens einem Kreis und/oder wenigstens einem Schriftzug, angeordnet. Ferner sind die Bezugsobjekte und/oder die Muster alternativ oder zusätzlich auf wenigstens einem für die jeweilige Anwendung relevanten Objekt, beispielsweise der Airbag-Klappe und/oder dem eigentlichen Airbag und/oder dem Lenkrad, angebracht. Die Verarbeitungseinheit 14 umfasst wenigstens einen Mikroprozessor und besteht aus mehreren in Figur 4 dargestellten Modulen, die als Programme und/oder Programmschritte des wenigstens einen Mikroprozessors ausgestaltet sind.

Figur 4 zeigt ein Ablaufdiagramm des Verfahrens des bevorzugten Ausführungsbeispiels zur automatischen Kontrolle und/oder Nachführung und/oder Bestimmung wenigstens eines Kalibrierparameters der geometrischen Kalibrierung des wenigstens einen Bildsensors. Das Verfahren setzt Modellwissen 60 über die geometrische Lage von Bezugsobjekten im Innenraum des Kraftfahrzeuges und/oder über die Sollwerte 64 der Messdaten des wenigstens einen Bildsensors der Bezugsobjekte des Innenraumes des Kraftfahrzeuges voraus. Während des Einsatzes (Betrieb) werden die zu den bekannten Bezugsobjekten zugehörigen Sensormessdaten in Form von Bildsignalen 22 durch den Bildsensor 12 detektiert. Die Sensormessdaten (Bildsignale 22) der Bezugsobjekte werden mit den Solldaten 64 im Modul zur Differenzbildung 66 verglichen und hieraus im Modul zur Bestimmung der Kalibrierdaten 68 eine Dekalibrierung des Bildsensors erkannt und/oder es werden aus den Sensormessdaten (Bildsignale 22) der Bezugsobjekte wenigstens ein Kalibrierparameter über ein mathematisches Modell der Bildsensorabbildung bestimmt. Im Kraftfahrzeug-Innenraum sei ein euklidisches Koordinatensystem (Fahrzeugkoordinatensystem) definiert. Es gibt im Fahrzeug-Innenraum punktförmige Bezugsobjekte $P_i$ (i=1..N) mit bekannten 3D-Koordinaten (xi, yi, zi). Weiterhin ist die Solllage eines Bildsensors im 3D-Fahrzeugkoordinatensystem (extrinsische Kalibrierparameter) gegeben. Die Solllage besteht aus 6 Parametern, der Position des Projektionszentrums des Bildsensors im Kraftahrzeug: (tx, ty, tz) und der Rotation zwischen Kraftfahrzeug und Bildsensor, die mit den Drehwinkeln $\alpha$, $\psi$, $\gamma$, angegeben wird. Aus den Drehwinkeln ergibt sich die Rotationsmatrix

$$\mathbf{R} = \begin{pmatrix} r_{11} & r_{12} & r_{13} \\ r_{21} & r_{22} & r_{23} \\ r_{31} & r_{32} & r_{33} \end{pmatrix} = \begin{pmatrix} \cos\psi\cos\gamma & \cos\psi\sin\gamma & -\sin\psi \\ \sin\alpha\sin\psi\cos\gamma - \cos\alpha\sin\gamma & \sin\alpha\sin\psi\sin\gamma + \cos\alpha\cos\gamma & \sin\alpha\cos\psi \\ \cos\alpha\sin\psi\cos\gamma + \sin\alpha\sin\gamma & \cos\alpha\sin\psi\sin\gamma - \sin\alpha\cos\gamma & \cos\alpha\cos\psi \end{pmatrix} \quad (1)$$

Weiterhin sind die intrinsische Kalibrierparameter, die Kammerkonstanten $c_x$, $c_y$ und die Koordinaten des Bildhauptpunktes $x_H$, $y_H$ bekannt. Die Projektion der 3D-Koordinaten ($x_i$, $y_i$, $z_i$) der Punktobjekte in das Bild, in die Bildkoordinaten ($x'_i$, $y'_i$) lässt sich mathematisch beschreiben mit:

$$x'_i = c_x \frac{r_{11}(x_i - t_x) + r_{12}(y_i - t_y) + r_{13}(z_i - t_z)}{r_{31}(x_i - t_x) + r_{32}(y_i - t_y) + r_{33}(z_i - t_z)} + x_H;$$

$$y'_i = c_x \frac{r_{21}(x_i - t_x) + r_{22}(y_i - t_y) + r_{23}(z_i - t_z)}{r_{31}(x_i - t_x) + r_{32}(y_i - t_y) + r_{33}(z_i - t_z)} + y_H;$$

(2)

Ergebnis sind Sollkoordinaten $x'_{si}$, $y'_{si}$ der punktförmigen Bezugsobjekte im Bild. Die Messung der punktförmigen Bezugsobjekte im Bild liefert die Bildkoordinaten $x'_{Mi}$, $y'_{Mi}$. Die Distanz zwischen Solllage und Istlage

$$d_{SMi} = \sqrt{(x'_{Si} - x'_{Mi})^2 + (y'_{Si} - y'_{Mi})^2}$$

(3)

wird für die Erkennung der Dekalibrierung des Sensorsystems verwendet. Wenn Distanzen über einer vorgegebenen Schwelle liegen ($d_{MSi} > d_{MSmax}$) dann liegt eine Dekalibrierung des Bildsensors vor. Für eine Korrektur der extrinsischen Kalibrierparameter ($\alpha$, $\psi$, $\gamma$, tx, ty, tz) des Bildsensors werden die Parameter ($\alpha$, $\psi$, $\gamma$, tx, ty, tz) variiert, so dass die Fehlerquadratsumme zwischen gemessenen Bildkoordinaten und projizierten Bildkoordinaten minimal wird:

$$\sum_i \left( x'_{Mi} - x'(\alpha, \psi, \gamma, t_x, t_y, t_z, x_i, y_i, z_i) \right)^2 + \left( y'_{Si} - y'(\alpha, \psi, \gamma, t_x, t_y, t_z, x_i, y_i, z_i) \right)^2 \rightarrow \min \quad (4)$$

Die Bildkoordinaten x'($\alpha$, $\psi$, $\gamma$, tx, ty, tz) bzw. y'($\alpha$, $\psi$, $\gamma$, tx, ty, tz) ergeben sich aus der obigen Projektionsvorschrift (2).

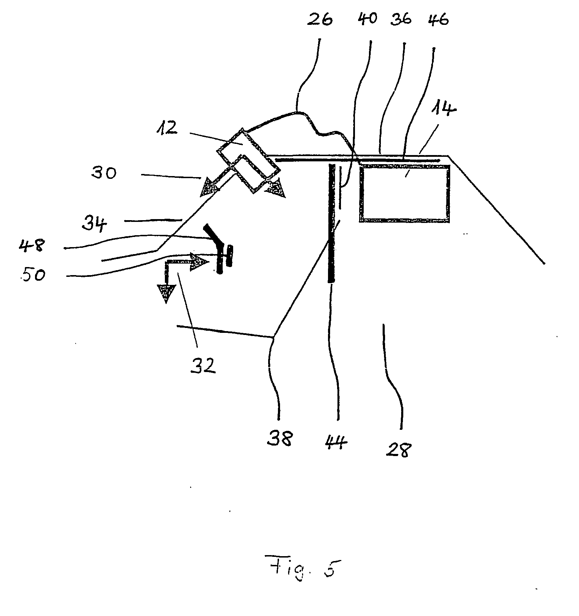

Figur 5 zeigt eine Übersichtszeichnung eines weiteren Ausführungsbeispiels mit einer Vorrichtung zur Bestimmung wenigstens eines Kalibrierparameters des Bildsensors 12. Figur 5 ist eine Erweiterung der Figur 1. Im folgenden werden nur die zusätzlichen Teile der Figur 5 erläutert. Zum Zweck der Überwachung einer Dekalibrierung und/oder zur Bestimmung wenigstens eines Kalibrierparameters der geometrischen Kalibrierung werden in diesem Ausführungsbeispiel die Lage von bauartbedingt im Kraftfahrzeug vorhandenen Objekten in den Sensormessdaten überwacht und verfolgt. Die bauartbedingt im Kraftfahrzeug vorhandenen Objekte, wie der Türholm 44 und/oder der Himmel des Fahrzeugdaches 46 und/oder die Armatur 48, werden als Bezugsobjekte verwendet, wobei deren Lage in Abhängigkeit der Bildsignale des Bildsensors 12 vermessen und kontrolliert wird. Die Verarbeitungseinheit 14 umfasst wie im bevorzugten Ausführungsbeispiel nach Figur 3 wenigstens einen Mikroprozessor und besteht aus mehreren in Figur 4 dargestellten Modulen, die als Programme und/oder Programmschritte des wenigstens einen Mikroprozessors ausgestaltet sind. In einer weiteren Ausführungsform werden als Bezugsobjekte sowohl wenigstens ein zur Bestimmung des wenigstens einen Kalibrierparameters in der Szene angebrachtes Bezugsobjekt (ein signalisierendes Bezugsobjekt) und wenigstens ein natürlich vorkommendes Objekt der Szene, also ein bauartbedingt im Innenraum des Kraftfahrzeuges befindliches Objekt, verwendet.

Die beschriebene Vorrichtung und das Verfahren zur Bestimmung wenigstens eines Kalibrierparameters wenigstens eines Bildsensors, sind nicht auf den Einsatz in der Kraftfahrzeugtechnik beschränkt. Vielmehr lässt sich die beschriebene Vorgehensweise mit den entsprechenden Merkmalen auch außerhalb der Kraftfahrzeugtechnik einsetzen. Voraussetzung ist lediglich, dass wenigstens ein Bildsensor derart konfiguriert ist, dass der wenigstens eine Bildsensor zur Überwachung einer in Teilen gleichbleibenden Szene geeignet ist. Eine in Teilen gleichbleibende Szene zeichnet sich dadurch aus, dass die Teile der Szene zeitlich unveränderlich sind. Solche Szenen treten beispielsweise in der Überwachungstechnik und der Sicherheitstechnik auf. Bei der Überwachung von Flughäfen, Bahnhöfen oder Straßen ist die Szene ebenfalls in Teilen gleichbleibend. Ein anderer Anwendungsfall ist die Überwachung eines Raumes, beispielsweise eines Tresorraumes einer Bank, mit wenigstens einem Bildsensor. Auch diese Szenen sind in Teilen gleichbleibend. Ferner lässt sich das Verfahren bei wenigstens einem Bildsensor verwenden, der zur Überwachung der Umgebung eines Kraftfahrzeuges eingesetzt wird. Voraussetzung ist auch hier, dass Teile der Szene zeitlich unveränderlich sind. Zeitlich unveränderliche Teile liegen dann vor, wenn Bestandteile des Kraftfahrzeuges, beispielsweise die Motorhaube und/oder die Stoßstange, im Bilderfassungsbereich des wenigstens einen Bildsensors liegen.

In einer Variante der beschriebenen Vorrichtung und des Verfahrens ist wenigstens ein Bezugsobjekt auf wenigstens einem bezüglich der Überwachungsfunktion des wenigstens einen Bildsensors relevanten Objekt der Szene angebracht. Relevante Objekte zeichnen sich dadurch aus, dass sie entweder direkt das Objekt der Überwachungsfunktion des wenigstens einen Bildsensors 12 sind oder alternativ oder zusätzlich indirekt funktional mit der Überwachungsfunktion des Bildsensors verbunden sind. Im Bereich der Kraftfahrzeugtechnik sind die Airbagklappe ein Beispiel für ein relevantes Objekt, das indirekt funktional mit der Überwachungsfunktion des Bildsensors verbunden ist. Obwohl der Bildsensor primär zur Überwachung der Belegungssituation der Sitze verwendet wird, ist die Überwachungsfunktion funktional über die Airbagsteuerung mit der Airbag-Klappe verbunden. Im Bereich der Sicherheitstechnik, beispielsweise bei der Überwachung eines Tresorraumes einer Bank, ist der Tresor der Bank direkt das relevante Objekt der Überwachungsfunktion des wenigstens einen Bildsensors.

Die vorstehend beschriebene Vorrichtung und das Verfahren werden in weiteren Varianten bei wenigstens einem oder mehr als einem Bildsensor angewendet. Als Bildsensoren wird wenigstens ein monokularer Bildsensor und/ oder wenigstens eine Stereokamera und/oder wenigstens ein tiefenbildgebender Bildsensor verwendet. Stereokameras bestehen aus wenigstens zwei Bildsensoren, die im wesentlichen dieselbe Szene aufnehmen. Tiefenbildgebende Bildsensoren sind Entfernungsbild-Sensor, beispielsweise Time-of-Flight optische Sensoren (range video camera).

## Patentansprüche

1. Vorrichtung zur Bestimmung wenigstens eines Kalibrierparameters wenigstens eines Bildsensors,

   - wobei der wenigstens eine Bildsensor eine in Teilen gleichbleibende Szene, insbesondere den Innenraum eines Kraftfahrzeuges, überwacht,
   - wobei wenigstens eine Verarbeitungseinheit in Abhängigkeit von Bildsignalen eine Dekalibrierung des wenigstens einen Bildsensors im Betrieb des wenigstens einen Bildsensors erkennt,
   - wobei die wenigstens eine Verarbeitungseinheit bei einer erkannten Dekalibrierung die Dekalibrierung einem nachfolgenden System und/oder dem Fahrer meldet, und/oder den wenigstens einen Kalibrierparameter in Abhängigkeit von den Bildsignalen bestimmt,
   - wobei der wenigstens eine Bildsensor die Bildsignale zumindest von wenigstens einem invarianten Muster im Bilderfassungsbereich des wenigstens einen Bildsensors ableitet,

   **dadurch gekennzeichnet, dass**
   das wenigstens eine invariante Muster durch wenigstens ein zur Bestimmung des wenigstens einen Kalibrierparameters in der Szene angebrachtes Bezugsobjekt gebildet wird, wobei das wenigstens eine Bezugsobjekt ein Leuchtmittel ist und/oder dass das wenigstens eine Bezugsobjekt derart gestaltet ist, dass es eine hohe Reflektivität, d.h. eine Reflektivität zwischen 0,5 und 1,0, aufweist.

2. Vorrichtung nach Anspruch 1, **dadurch gekennzeichnet, dass** das wenigstens eine Bezugsobjekt eine Infrarot-Leuchtdiode ist.

3. Vorrichtung nach einem der vorhergehenden Ansprüche, **dadurch gekennzeichnet, dass** das wenigstens eine Bezugsobjekt eine geometrische Form hat, beispielsweise ein Punkt und/oder ein Kreis und/oder ein Dreieck und/ oder ein Viereck und/oder ein Quadrat, und/oder dass das wenigstens eine Bezugsobjekt wenigstens ein Buchstabe und/oder wenigstens ein Schriftzug und/oder wenigstens ein Logo ist.

4. Vorrichtung nach einem der vorhergehenden Ansprüche, **dadurch gekennzeichnet, dass** das wenigstens eine Bezugsobjekt auf wenigstens einem bezüglich der Überwachungsfunktion des wenigstens einen Bildsensors relevanten Objekt der Szene angebracht ist, insbesondere, dass das wenigstens eine Bezugsobjekt auf wenigstens einer Airbag-Klappe und/oder wenigstens einem Airbag und/oder wenigstens einem Lenkrad im Innenraum des Kraftfahrzeuges angebracht ist.

5. Vorrichtung nach einem der vorhergehenden Ansprüche, **dadurch gekennzeichnet, dass** das wenigstens eine invariante Muster durch wenigstens ein natürlich vorkommendes Objekt der Szene gebildet wird, insbesondere, dass das wenigstens eine invariante Muster durch wenigstens ein bauartbedingt im Innenraum eines Kraftfahrzeug befindliches Objekt gebildet wird.

6. Verfahren zur Bestimmung wenigstens eines Kalibrierparameters wenigstens eines Bildsensors,

   - wobei der wenigstens eine Bildsensor eine in Teilen gleichbleibende Szene, insbesondere den Innenraumes eines Kraftfahrzeuges, überwacht,
   - wobei eine Dekalibrierung des wenigstens einen Bildsensors während des Betriebes des wenigstens einen Bildsensors in Abhängigkeit von Bildsignalen erkannt wird,
- wobei bei einer erkannten Dekalibrierung die Dekalibrierung einem nachfolgenden System und/oder dem Fahrer gemeldet wird, und/oder der wenigstens eine Kalibrierparameter in Abhängigkeit von den Bildsignalen bestimmt wird,
- wobei die Bildsignale zumindest von wenigstens einem invarianten Muster im Bilderfassungsbereich des wenigstens einen Bildsensors von dem wenigstens einen Bildsensor abgeleitet werden,

**dadurch gekennzeichnet, dass**
die Bildsignale zumindest von wenigstens einem zur Bestimmung des wenigstens einen Kalibrierparameters in der Szene angebrachten Bezugsobjekt abgeleitet werden, wobei das wenigstens eine Bezugsobjekt ein Leuchtmittel ist und/oder das wenigstens eine Bezugsobjekt eine hohe Reflektivität, d.h. eine Reflektivität zwischen 0,5 und 1,0, aufweist.

**7.** Verfahren nach Anspruch 6, **dadurch gekennzeichnet, dass** die Bildsignale zumindest von wenigstens einem natürlich vorkommenden Objekt der Szene abgeleitet werden.

**8.** Verfahren nach Anspruch 6 oder 7, **dadurch gekennzeichnet, dass** das wenigstens eine Bezugsobjekt auf einem bezüglich der Überwachungsfunktion des wenigstens einen Bildsensors relevanten Objekt der Szene angebracht ist, insbesondere, dass das wenigstens eine Bezugsobjekt auf wenigstens einer Airbag-Klappe und/oder wenigstens einem Airbag und/oder wenigstens einem Lenkrad im Innenraum des Kraftfahrzeuges angebracht ist.

**9.** Computerprogramm mit Programmcode-Mitteln, um alle Schritte von jedem beliebigen der Ansprüche 6 bis 8 durchzuführen, wenn das Programm auf einem Computer ausgeführt wird.

**Claims**

**1.** Device for determining at least one calibration parameter of at least one image sensor,

   - the at least one image sensor monitoring a scene which remains the same in parts, in particular the interior of a motor vehicle,
   - at least one processing unit detecting decalibration of the at least one image sensor during operation of the at least one image sensor on the basis of image signals,
   - the at least one processing unit reporting the decalibration to a downstream system and/or the driver if decalibration is detected and/or determining the at least one calibration parameter on the basis of the image signals,
   - the at least one image sensor deriving the image signals at least from at least one invariant pattern in the image acquisition area of the at least one image sensor,

   **characterized in that**
   the at least one invariant pattern is formed by at least one reference object which is placed in the scene in order to determine the at least one calibration parameter, the at least one reference object being a luminous means, and/or **in that** the at least one reference object is configured in such a manner that it has a high reflectivity, that is to say a reflectivity of between 0.5 and 1.0.

**2.** Device according to Claim 1, **characterized in that** the at least one reference object is an infrared light-emitting diode.

**3.** Device according to one of the preceding claims, **characterized in that** the at least one reference object has a geometrical shape, for example a dot and/or a circle and/or a triangle and/or a rectangle and/or a square, and/or **in that** the at least one reference object is at least one letter and/or at least one stroke and/or at least one logo.

**4.** Device according to one of the preceding claims, **characterized in that** the at least one reference object is placed on at least one object of the scene, which is relevant to the monitoring function of the at least one image sensor, in particular **in that** the at least one reference object is placed on at least one airbag flap and/or at least one airbag and/or at least one steering wheel in the interior of the motor vehicle.

**5.** Device according to one of the preceding claims, **characterized in that** the at least one invariant pattern is formed by at least one naturally occurring object of the scene, in particular **in that** the at least one invariant pattern is formed by at least one object which, due to its design, is in the interior of a motor vehicle.

**6.** Method for determining at least one calibration parameter of at least one image sensor,

- the at least one image sensor monitoring a scene which remains the same in parts, in particular the interior of a motor vehicle,
- decalibration of the at least one image sensor during operation of the at least one image sensor being detected on the basis of image signals,
- the decalibration being reported to a downstream system and/or the driver if decalibration is detected and/or the at least one calibration parameter being determined on the basis of the image signals,
- the at least one image sensor deriving the image signals at least from at least one invariant pattern in the image acquisition area of the at least one image sensor,

**characterized in that**
the image signals are derived at least from at least one reference object which is placed in the scene in order to determine the at least one calibration parameter, the at least one reference object being a luminous means and/or the at least one reference object having a high reflectivity, that is to say a reflectivity of between 0.5 and 1.0.

**7.** Method according to one Claim 6, **characterized in that** the image signals are derived at least from at least one naturally occurring object of the scene.

**8.** Method according to Claim 6 or 7, **characterized in that** the at least one reference object is placed on an object of the scene, which is relevant to the monitoring function of the at least one image sensor, in particular **in that** the at least one reference object is placed on at least one airbag flap and/or at least one airbag and/or at least one steering wheel in the interior of the motor vehicle.

**9.** Computer program having program code means for carrying out all of the steps of any of Claims 6 to 8 if the program is executed on a computer.

**Revendications**

**1.** Dispositif pour déterminer au moins un paramètre de calibrage d'au moins un capteur d'image

- au moins un capteur d'image surveillant une scène à parties figées, notamment l'habitacle d'un véhicule,
- au moins une unité de traitement reconnaît en fonction des signaux d'image, un décalibrage d'au moins un capteur d'image en fonctionnement d'au moins un capteur d'image,
- au moins une unité de traitement, lorsqu'un décalibrage est reconnu, signale le décalibrage à un système en aval et/ou au conducteur et/ou détermine au moins un paramètre de calibrage en fonction des signaux d'image,
- au moins un capteur d'image déduit les signaux d'image d'au moins un motif invariant de la plage de saisie d'image d'au moins un capteur d'image,

**caractérisé en ce qu'**
au moins un motif invariant est formé par au moins un objet de référence prévu dans la scène pour déterminer au moins un paramètre de calibrage,
au moins un objet de référence étant un moyen d'éclairage et/ou au moins un objet de référence est conçu pour avoir une réflectivité élevée, c'est-à-dire une réflectance comprise entre 0,5 et 1,0.

**2.** Dispositif selon la revendication 1,
**caractérisé en ce qu'**
au moins un objet de référence est une photodiode infrarouge.

**3.** Dispositif selon l'une des revendications précédentes,
**caractérisé en ce qu'**
au moins l'objet de référence a une forme géométrique, par exemple une forme de point et/ou de cercle et/ou de triangle et/ou de polygone et/ou de carré et/ou au moins un objet de référence est au moins une lettre et/ou au moins un trait d'écriture et/ou au moins un logo.

**4.** Dispositif selon l'une des revendications précédentes,
**caractérisé en ce qu'**

au moins l'objet de référence est prévu sur au moins un objet de la scène caractéristique pour la fonction de surveillance d'au moins un capteur d'image, et au moins un objet de référence est prévu sur au moins un volet de coussin gonflable et/ou un coussin gonflable et/ou un volant à l'intérieur de l'habitacle du véhicule.

5. Dispositif selon l'une des revendications précédentes,
**caractérisé en ce qu'**
au moins un motif invariant est formé par au moins un objet présent naturellement dans la scène, notamment au moins un motif invariant formé par au moins un objet qui se trouve nécessairement par construction dans l'habitacle du véhicule.

6. Procédé pour déterminer au moins un paramètre de calibrage d'au moins un capteur d'image, selon lequel

   - au moins un capteur d'image surveille une scène à partie constante, notamment l'habitacle d'un véhicule automobile,
   - un décalibrage d'au moins un capteur d'image pendant le fonctionnement d'au moins un capteur d'image est reconnu en fonction des signaux d'image,
   - et en cas de décalibrage reconnu, le décalibrage est signalé à un système en aval et/ou au conducteur et/ou on détermine au moins un paramètre de calibrage en fonction des signaux d'image,
   - et on déduit les signaux d'image d'au moins un motif invariant de la plage de saisie d'image d'au moins un capteur d'image correspondant au moins à un capteur d'image,

   **caractérisé en ce qu'**
   on déduit les signaux d'image d'au moins un objet de référence installé dans la scène pour déterminer au moins un paramètre de calibrage, au moins cet objet de référence étant un moyen d'éclairage et/ou au moins un objet de référence ayant une forte réflectivité, c'est-à-dire une réflectance comprise entre 0,5 et 1,0.

7. Procédé selon la revendication 6,
**caractérisé en ce que**
les signaux d'image sont déduits d'au moins un objet existant naturellement dans la scène.

8. Procédé selon les revendications 6 ou 7,
**caractérisé en ce qu'**
au moins un objet de référence est installé sur au moins un objet caractéristique de la scène pour la fonction de surveillance d'au moins un capteur d'image, notamment un objet de référence est installé sur au moins un volet de coussin gonflable et/ou au moins un coussin gonflable et/ou au moins un volant à l'intérieur de l'habitacle du véhicule.

9. Programme d'ordinateur comportant des moyens de code de programme pour exécuter toutes les étapes de l'une quelconque des revendications 6 à 8 lorsque le programme est exécuté par un ordinateur.

Fig. 1

10   12   14   16   18
20   22   24

Fig. 2

Fig. 3

12

60

22

64

66

68

Fig. 7

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0160662 A1

- US 20020030608 A1